## Europäisches Patentamt

## European Patent Office

## Office européen des brevets

(19)

(11) Numéro de publication: **0 064 925**
**B1**

(12)

# FASCICULE DE BREVET EUROPEEN

(45) Date de publication du fascicule du brevet:
**14.08.85**

(21) Numéro de dépôt: **82400828.8**

(22) Date de dépôt: **05.05.82**

(51) Int. Cl.⁴: **B 62 D 43/04**

(54) **Dispositif de verrouillage d'un support de roue de secours, sous le plancher d'un véhicule.**

(30) Priorité: **13.05.81 FR 8109510**

(43) Date de publication de la demande:
**17.11.82 Bulletin 82/46**

(45) Mention de la délivrance du brevet:
**14.08.85 Bulletin 85/33**

(84) Etats contractants désignés:
**DE GB IT**

(56) Documents cités:
**EP - A - 0 001 725**
**FR - A - 1 301 860**
**FR - A - 1 416 531**
**FR - A - 1 551 853**
**FR - A - 2 340 236**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Mire, Claude, 55 Rue Henri Richaume, F-78360 Montesson (FR)**

(74) Mandataire: **Moncheny, Michel et al, c/o Cabinet Lavoix 2 Place d'Estienne d'Orves, F-75441 Paris Cedex 09 (FR)**

## Description

L'invention est relative aux supports de roue de secours disposés sous le plancher des véhicules. Ces supports, usuellement appelés paniers, sont de préférence articulés sour le plancher et présentent, à proximité d'un bord du véhicule, une extrémité mobile propre à être abaissée pour permettre le passage de la roue de secours et à être maintenue en position relevée par un dispositif d'accrochage.

Ce dispositif d'accrochage comprend généralement un crochet susceptible de coopérer avec l'extrémité mobile du panier et d'être manoeuvré par un moyen de commande disposé sur le plancher, pour être aisément accessible, et de préférence dans un logement propre à être fermé et verrouillé, tel qu'un coffre à bagages, pour éviter le vol de la roue de secours.

Un dispositif connu simple comporte, comme moyen de commande, la tête d'une vis dont la tige filetée, tournée vers le bas, traverse le plancher et coopère avec un écrou solidaire du crochet qui, arrêté en rotation, s'élève ou s'abaisse selon qu'on fait tourner la vis dans un sens ou dans l'autre. En s'élevant, le crochet tire sur le panier jusqu'à serrer la roue de secours contre le plancher ou contre une butée qui en est solidaire; en position basse, le crochet peut être désolidarisé du panier et écarté de celui-ci par un léger basculement de l'ensemble vis et crochet autour du point d'appui de la tête de vis contre le plancher. Une telle disposition présente toutefois l'inconvénient de permettre un décrochage intempestif du panier, soit par séparation du crochet et de l'extrémité mobile sous l'effet de secousses importantes imprimées au véhicule, si la vis est insuffisamment serrée (notamment par suite d'un degonflage de la roue de secours), soit par déformation du crochet en raison, par exemple, d'un choc extérieur, soit même par écartement volontaire du crochet au moyen d'un outil simple, en vue par exemple du vol de la roue de secours.

Pour limiter ce risque, dans le dispositif décrit dans le FR-A-1 301 860 un crochet déplacé par la rotation d'une vis suspendue au plancher, entre une position haute d'accrochage et une position basse de libération, est introduit en position haute par un carter en U dont les côtés maintiennent l'extrémité mobile du panier, prisonnière dans le crochet. Ce crochet est monté pivotant sur une noix vissée sur la vis afin de pouvoir, en position basse, s'écarter du carter pour libérer l'extrémité du panier.

Les risques de séparation accidentelle du crochet et du panier, sous l'effet de secousses ou analogues, sont ainsi pratiquement supprimés. Par contre, un basculement forcé du crochet reste possible et peut permettre la libération de l'extrémité du panier.

D'autres dispositifs d'accrochage évitent cet inconvénient en utilisant des crochets articulés, verrouillés par divers mécanismes à ressorts et leviers, mais de tels systèmes sont relativement coûteux, car ils comportent un grand nombre de pièces qui doivent être assez précises et leur fonctionnement est souvent entravé par l'encrassement dû à leur disposition sous le plancher.

Par ailleurs, l'articulation du panier est généralement constituée par simple accrochage de deux axes solidaires du panier dans des paliers ouverts à leur partie supérieure, ce qui permet le passage radial des axes et leur montage rapide par le haut de chaque palier, mais malheureusement rend également possible un décrochage intempestif de l'extrémité articulée du panier, notamment sous l'effet d'une poussée vers le haut suffisamment forte pour faire sortir au moins un axe du palier correspondant, par son ouverture supérieure.

L'invention a pour but d'éviter ces risques de décrochage intempestif en proposant un dispositif de verrouillage particulièrement simple et peu coûteux, pour assurer une retenue positive et inviolable du panier dans la position d'utilisation.

Cette invention concerne en effet un dispositif de verrouillage d'un panier de support de roue de secours sous le plancher d'un véhicule, comportant au moins un axe d'articulation porté par un palier fixé sur la structure du véhicule et une extrémité mobile coopérant, en position d'utilisation, avec un crochet vissé sur une vis rotative suspendue au plancher, le crochet comportant une armature reliant un embout crochu inférieur et un embout fileté supérieur dans lequel est vissée la vis, de sorte qu'il est déplacé entre une position haute d'accrochage et une position basse de libération du panier, par la rotation de la vis, et coopérant avec des moyens de maintien de l'extrémité mobile de panier prisonnière dans le crochet en position d'accrochage, caractérisé en ce qu'il comporte une tige de prolongement de la vis propre à traverser un trou pratiqué dans l'embout crochu du crochet lorsque ce dernier est en position haute d'accrochage, de sorte que, dans cette position, la tige maintient l'extrémité mobile du panier prisonnière entre elle et l'armature du crochet, en même temps qu'elle verrouille l'embout crochu du crochet.

Ni des secousses même fortes ni une déformation du crochet, qu'elle soit accidentelle ou volantaire, ne suffisent alors pour libérer l'extrémité mobile du panier, qui peut se déplacer par rapport au crochet et même à la tige di prolongement de la vis sans cesser d'être verrouillée.

Selon une autre caractéristique, le dispositif de verrouillage comporte en outre, à l'extrémité de chacun des axes d'articulation qui sont montés dans des paliers ouverts à leur partie supérieure, un prolongement recourbé qui est engagé dans un trou pratiqué dans la structure du véhicule, en position d'utilisation du panier.

La coopération des trous et des prolongements recourbés de chacun des axes interdit le soulèvement de ces axes hors de leur palier respectif, même sous l'action d'une poussée importante vers le haut. En conséquence le panier est verrouillé de manière sûre dans sa position d'utilisation, quels que soient les efforts qui s'exercent sur lui et même si ces efforts tendent à le faire pivoter autout de la tige de prolongement de la vis. Aucun décrochage intempestif n'est donc à craindre.

Un exemple de réalisation d'un dispositif de verrouillage selon l'invention est décrit ci-après, en référence aux dessins annexés, sur lesquels:

la fig. 1 est une vue en coupe verticale suivant la ligne 1-1 de la fig. 2, d'un panier support de roue muni d'un dispositif de verrouillage selon l'invention, en position d'utilisation;

la fig. 2 est une vue en coupe suivant la ligne 2-2 de la fig. 1;

la fig. 3 est une vue de gauche du dispositif d'accrochage, avec coupe partielle, suivant la ligne 3-3 de la fig. 1;

les fig. 4 et 5 sont des vues partielles analogues à la fig. 1, montrant le pivotement du panier support vers sa position d'utilisation.

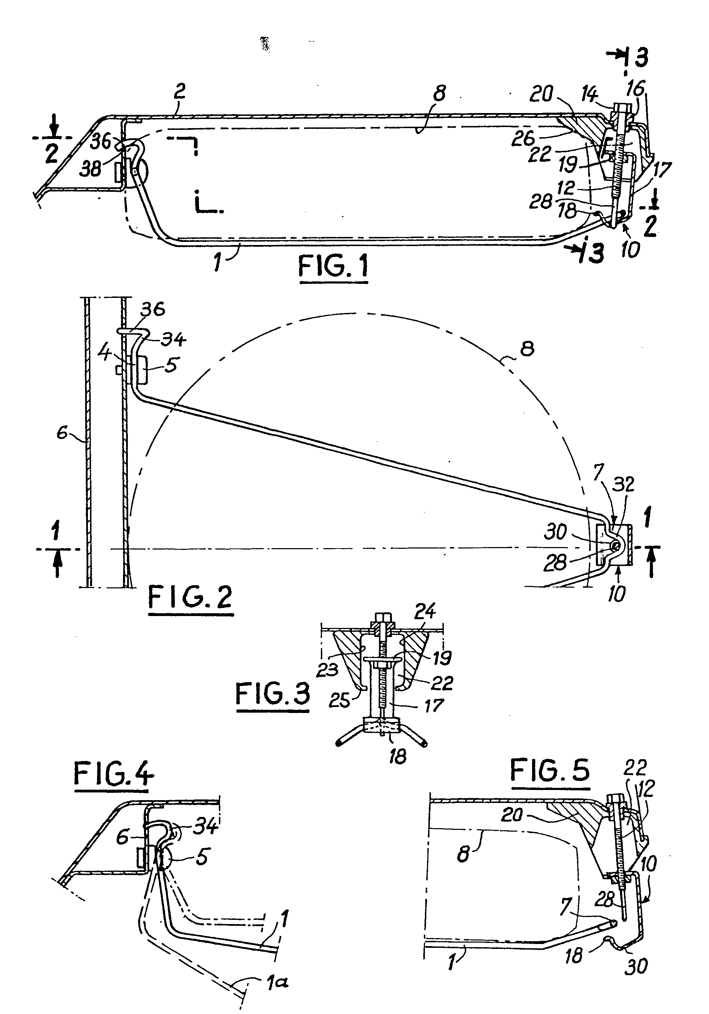

Un panier 1 de support d'une roue de secours sous le plancher d'un véhicule, par exemple sous le plancher 2 du coffre à bagages de ce véhicule, est, comme le montre plus particulièrement la fig. 2, constitué par une tige métallique pliée ayant en plan sensiblement la forme d'un V. Les deux extrémités de cette tige forment deux axes d'articulation alignés 4, parallèles au plancher 2 et portés chacun par un palier 5 ouvert à sa partie supérieure et fixé sur une traverse 6 de la structure du véhicule. A l'opposé, le sommet 7 du V, ou portion médiane de la tige, est situé près d'un bord du véhicule, par exemple du bord arrière près duquel s'effectue l'accès au coffre à bagages. Ce sommet 7 constitue l'extrémité mobile ou d'accès du panier, qui peut être écartée du plancher 2 pour permettre la mise en place ou le retrait d'une roue de secours, telle que celle indiquée en trait mixte en 8 sur les figures 1 et 2.

En temps normal cette extrémité mobile 7 est maintenue en position relevée par un crochet 10 (fig. 1), qui est vissé sur une vis 12 disposée verticalement et suspendue au plancher 2 par appui de sa tête 14 sur une bague épaulée 16 maintenue dans un trou de ce plancher. Dans ce but le crochet 10 comporte de part et d'autre d'une armature 17 en embout crochu inférieur 18 et un embout supérieur 19 qui est fileté directement ou par l'intermédiaire d'un écrou soudé, et coopère avec la vis 12 pour permettre le déplacement du crochet 10 et le réglage de sa position en hauteur par rapport au plancher 2.

La bague 16 qui supporte la tête 14 de la vis 12 traverse également un trou de la paroi supérieure d'une pièce de butée 20, fixée sous le plancher et comportant un évidement 22 de logement de la vis 12 et de l'embout supérieur 19 du crochet. Le logement 22 s'évase vers le bas, vers l'avant et vers l'arrière du véhicule, comme le montrent plus particulièrement les figures 1 et 5, mais comporte deux parois verticales 23 et 24, qui sont parallèles entre elles et ne sont séparées que par une distance très légèrement supérieure à la largeur de l'embout supérieur 19 du crochet 10. Ces parois 23 et 24 assurent ainsi le guidage du crochet 10 et, en outre, interdisent à la fois sa rotation autour de l'axe de la vis 12 et son déplacement transversal.

L'extrémité inférieure du logement 22 est par ailleurs pourvue de rebords 25 espacés d'une distance supérieure à la largeur de l'armature 17 du crochet 10 mais inférieure à la largeur de l'embout supérieur 19 (fig. 3). La bague 16, qui supporte la tête 14 de la vis 12 est soit légèrement souple, soit montée flottante dans le trou du plancher, de manière à permettre à cette vis de s'incliner plus ou moins par rapport à la verticale, en direction de l'une ou l'autre des parois divergentes du logement 22.

De préférence la pièce de butée 20, fixée sous le plancher, comporte vers l'avant une face inclinée 26 servant de butée arrière supérieure à la roue de secours 8.

Comme le montrent les dessins, la vis 12 prolongée à sa partie inférieure par une tige de verrouillage 28 qui est coaxiale à un trou 30 pratiqué dans l'embout crochu inférieur 18 du crochet 10 (fig. 5) et est susceptible de traverser ce trou lorsque ce crochet est remonté dans la position d'accrochage du panier, représentée sur la fig. 1. L'extrémité 7 de ce panier est alors verrouillée entre la tige 28 et l'armature 17 du crochet 10 et ne peut être libérée que par le retrait de la tige, c'est-à-dire la descente du crochet 10.

L'extrémité 7 du panier comporte de préférence une ondulation 32 qui, comme le montre la fig. 2, est conformée de manière à contourner le trou 30 et la tige 28 lorsque l'extrémité 7 du panier repose dans l'embout crochu 18. L'extrémité 7 est ainsi pratiquement immobilisée latéralement par la tige 28, ce qui renforce le maintien du panier.

Par ailleurs, à l'extrémité opposée du panier, chaque axe d'articulation 4 comporte un prolongement recourbé 34 dont l'extrémité 36 est sensiblement orthogonale à l'axe lui-même et est engagée dans un trou 38 pratiqué dans la traverse 6, tant que le panier est en position d'utilisation c'est-à-dire aussi bien dans la position d'accrochage représentée sur la fig. 1 et indiquée en trait mixte sur la fig. 4, que dans la position inclinée d'accès à la roue, ou d'appui sur le sol, indiquée en trait plein sur la fig. 4. La longueur de l'extrémité 36 est toutefois choisie de manière à permettre son dégagement hors du trou 38 si nécessaire, par un basculement du panier 1 vers le bas, au-delà de la position normale d'appui au sol, comme indiqué en trait interrompu en 1a sur la fig. 4.

Un tel panier peut être mis en place ou démonté par une manoeuvre très simple, après soulèvement du véhicule, par exemple au moyen d'un cric ou sur un pont élévateur, mais ne peut en aucun cas démonté même par l'action d'une poussée très forte lorsque le véhicule est au sol. Les extrémités 36 des prolongements 34 assurent en effet un verrouillage efficace des extrémités de la tige métallique constituant le panier, tout en permettant le pivotement habituel de ce panier.

En effet, lorsqu'une roue de secours 8 doit être mise en place sur le panier de support 1 dont l'extrémité 7 a été libérée du crochet 10, ce panier 1 est abaissé dans la position indiquée en trait plein sur la fig. 4, c'est-à-dire en position d'appui sur le sol. Dans cette position les extrémités 36 des prolongements recourbés 34 restent verrouillées dans les trous 38 de la traverse 6. La roue 8 est alors placée sur le panier et poussée jusqu'à sa mise en butée contre la traverse 6. Ensuite l'extrémité arrière 7 du panier est relevée jusqu'à la hauteur du crochet 10. Un basculement de la vis 12 et du crochet 10 autour du centre de la bague 16 permet de placer sur l'embout inférieur 18 du crochet 10 l'extrémité 7 du panier, l'ondulation 32 entourant le trou 30. Puis le vissage de la vis 12 dans l'embout supérieur 19 du crochet 10 provoque la remontée de ce crochet le long de la vis 12, parallèlement à lui-même puisque sa rotation est interdite par la proximité des parois verticales 23. Par sa progression vers le haut, le crochet 10 soulève l'extrémité 7 du panier jusqu'à la faire passer autour de la tige 28 de prolongement de la vis 12, puis peu à peu à faire pénétrer cette tige 28 dans le trou 30. A ce moment l'extrémité 7 du panier est prisonnière entre la tige 28 et l'armature 17 du crochet. Elle est solidement verrouillée et ne peut plus être libérée que par la séparation de ces deux organes.

Aucune secousse ni poussée vers le haut exercée en un point quelconque du panier ne risque plus de provoquer un décrochage de ce dernier puisqu'il est verrouillé à la fois à sa partie avant et à sa partie arrière.

Par contre l'accès à la roue de secours peut s'effectuer aussi facilement qu'avec les dispositifs habituels en agissant sur la vis 12, dont la tête 14 est aisément accessible depuis l'intérieur du coffre à bagages et en provoquant, par une rotation de cette vis 12, une descente du crochet 10 qui automatiquement dégage la tige 28 du trou 30, puis s'éloigne de l'extrémité 7 du panier jusqu'au moment où l'embout supérieur 19 vient buter sur les rebords 25 du logement 22, ce qui arrête la descente du crochet. La vis 12 se met alors à monter par rapport au plancher 2, ce qui avertit l'utilisateur que l'abaissement maximal du crochet 10 est atteint. Il lui suffit alors de dégager de l'embout 18 l'extrémité 7 du panier et de faire pivoter légèrement la vis 12 vers l'arrière pour permettre le pivotement du panier 1 vers le sol.

On constate que le panier de support de roue de secours muni d'un dispositif de verrouillage selon l'invention est aussi simple à manoeuvrer et à assembler qu'un panier de support classique, mais assure un maintien constant et efficace, non seulement vis-à-vis des secousses ou des chocs, mais aussi contre les tentatives de vol.

**Revendications**

1. Dispositif de verrouillage d'un panier (1) de support de roue de secours sous le plancher d'un véhicule, comportant au moins un axe d'articulation (4) porté par un palier fixé sur la structure du véhicule et une extrémité mobile (7) coopérant, en position d'utilisation, avec un crochet (10) vissé sur une vis rotative (12) suspendue au plancher (2), le crochet comportant une armature reliant un embout crochu inférieur (18) et un embout fileté supérieur (19) dans lequel est vissée la vis (12), de sorte qu'il est déplacé entre une position haute d'accrochage et une position basse de libération du panier, par la rotation de la vis, et coopérant avec des moyens de maintien de l'extrémité mobile de panier prisonnière dans le crochet en position d'accrochage, caractérisé en ce qu'il comporte une tige (28) de prolongement de la vis (12) propre à traverser un trou (30) pratiqué dans l'embout crochu (18) du crochet (10) lorsque ce dernier est en position haute d'accrochage, de sorte que, dans cette position, la tige (28) maintient l'extrémité mobile (7) du panier prisonnière entre elle et l'armature (17) du crochet, en même temps qu'elle verrouille l'embout crochu (18) du crochet.

2. Dispositif suivant la revendication 1, caractérisé en ce qu'une pièce (20) de butée supérieure arrière de la roue est fixée sous le plancher (2) du véhicule et comporte un évidement (22) ayant deux parois verticales parallèles qui interdisent la rotation du crochet (10) autour de l'axe de la vis (12).

3. Dispositif suivant l'une des revendications 1 et 2, caractérisé en ce que l'extrémité mobile (7) du panier comporte une ondulation (32) en saillie vers l'extérieur qui, en position de verrouillage, contourne la tige de prolongement (28) de la vis et est prisonnière entre cette tige et l'armature (17) du crochet.

4. Dispositif suivant l'une des revendications 1 à 3, caractérisé en ce que la vis (12) est suspendue au plancher par appui de sa tête sur une bague (16) maintenue dans un trou du plancher et permettant le basculement de la vis et du crochet (10).

5. Dispositif suivant l'une des revendications précédentes, caractérisé en ce qu'il comporte à l'extrémité de chacun des axes d'articulation (4), qui sont montés dans des paliers (5) ouverts à leur partie supérieure, un prolongement (34) recourbé dont l'extrémité (36), en position d'utilisation du panier (1), est engagée dans un trou (38) pratiqué dans la structure (6) du véhicule.

6. Dispositif suivant la revendication 5, caractérisé en ce que le prolongement (34) de chacun des axes (4) a son extrémité (36) sensiblement orthogonale à l'axe (4) correspondant.

**Patentansprüche**

1. Vorrichtung zur Verriegelung eines Ersatzrad-Tragkorbs (1) unter dem Boden eines Fahrzeugs, mit wenigstens einer Anlenkachse (4), die von einem am Fahrzeugaufbau befestigten Lager getragen wird, und mit einem beweglichen Ende (7), das in Gebrauchsstellung mit einem Haken (10) zusammenarbeitet, der auf eine am Boden (2) aufgehängte drehbare Schraube (12) geschraubt ist, wobei der Haken einen Beschlag aufweist, der ein hakenförmiges unteres Endstück (18) mit einem mit Gewinde versehenen oberen Endstück (19) verbindet, in das die Schraube (12) eingeschraubt ist, so dass der Haken durch die Drehung der Schraube zwischen einer hohen Einhängestellung und einer tiefen Freigabestellung für den Korb verstellt werden kann, und wobei der Haken mit einer Halteeinrichtung für das bewegliche Korbende zusammenarbeitet, das in der Einhängestellung im Haken eingefangen ist, gekennzeichnet durch eine die Schraube (12) verlängernde Stange (28), die ein im hakenförmigen Endstück (18) des Hakens (10) ausgebildetes Loch (30) durchqueren kann, wenn der Haken sich in der hohen Einhängestellung befindet, so dass in dieser Stellung die Stange (28) das bewegliche Ende (7) des Korbs zwischen sich und dem Beschlag (17) des Hakens eingefangen hält und gleichzeitig das hakenförmige Endstück (18) des Hakens verriegelt.

2. Vorrichtung nach Anspruch 1, dadurch gekennzeichnet, dass ein oberes hinteres Anschlagstück (20) für das Rad unter dem Boden (2) des Fahrzeugs befestigt ist und eine Ausnehmung (22) mit zwei senkrechten parallelen Wänden aufweist, die die Drehung des Hakens (10) um die Achse der Schraube (12) verhindern.

3. Vorrichtung nach einem der Ansprüche 1 und 2, dadurch gekennzeichnet, dass das bewegliche Ende (7) des Korbs eine nach aussen überstehende Wellenform hat, die in Verriegelungsstellung die Verlängerungsstange (28) der Schraube umgibt und zwischen dieser Stange und dem Beschlag (17) des Hakens eingefangen ist.

4. Vorrichtung nach einem der Ansprüche 1 bis 3, dadurch gekennzeichnet, dass die Schraube (12) am Boden durch Anlage ihres Kopfs an einem Ring (16) aufgehängt ist, der im Loch des Bodens gehalten wird und das Schwenken der Schraube sowie des Hakens (10) ermöglicht.

5. Vorrichtung nach einem der vorhergehenden Ansprüche, dadurch gekennzeichnet, dass sie am Ende jeder der Anlenkachsen (4), die in an ihrem Oberteil offenen Lagern (5) gelagert sind, eine gekrümmte Verlängerung (34) aufweist, deren Ende (36) in Gebrauchsstellung des Korbs (1) in ein Loch (38) eingesetzt ist, das im Aufbau (6) des Fahrzeugs ausgebildet ist.

6. Vorrichtung nach Anspruch 5, dadurch gekennzeichnet, dass das Ende (36) der Verlängerung (34) jeder der Achsen (4) im wesentlichen senkrecht zur entsprechenden Achse (4) ist.

**Claims**

1. A device for locking a basket (1) supporting a spare wheel under the floor of a vehicle, comprising at least one pivot pin (4) carried by a bearing fixed to the structure of the vehicle and a movable end (7) cooperating, in the position of use, with a hook (10) screwed on a rotatable screw (12) suspended from the floor (2), the hook including a brace connecting a lower hooked end member (18) and an upper screwthreaded end member (19) in which the screw (12) is screwed so that it is shifted between an upper hooking position and a lower position for releasing he basket, by the rotation of the screw, and cooperating with means for maintaining the movable end of the basket trapped in the hook in the hooking position, characterised in that it comprises a rod (28) extending the screw (12) proper through an aperture (30) formed in the hooked end member (18) of the hook (10) when the latter is in the upper hooking position so that, in this positin, the rod (28) maintains the movable end (7) of the basket trapped between the basket and the brace (17) of the hook while at the same time it locks the hooked end member (18) of the hook.

2. A device according to claim 1, characterised in that a rear upper abutment member (20) for the wheel is fixed under the floor (2) of the vehicle and includes a cavity (22) having two parallel vertical walls which preclude the rotation of the hook (10) about the axis of the screw (12).

3. A device according to claim 1 or 2, characterised in that the removable end (7) of the basket comprises an aoutwardly projecting corrugation (32) which, in the locking position, extends around the extension rod (28) of the screw and is trapped between this rod and the brace (17) of the hook.

4. A device according to one of the claims 1 to 3, characterised in that the screw (12) is suspended from the floor by the bearing of its head against a ring (16) which is maintained in an aperture of the floor and allows the swinging of the screw and hook (10).

5. A device according to one of the preceding claims, characterised in that it comprises at the end of each of the pivot pins (4), which are mounted in bearings (5) open in their upper part, a bent extension (34) whose end (36), in the position of use of the basket (1), is engaged in an aperture (38) formed in the structure (6) of the vehicle.

6. A device according to claim 5, characterised in that the extension (34) of each of the pivot pins (4) has its end (36) substantially orthogonal to the corresponding pin (4).

FIG.1

FIG.2

FIG.3

FIG.4

FIG.5